# FASCICULE DE BREVET EUROPEEN

(11) **EP 1 970 876 B1**
(45) Date de publication et mention de la délivrance du brevet: **02.06.2010**
(21) Numéro de dépôt: 08290217.2
(22) Date de dépôt: 06.03.2008
(51) Int. Cl.: G09B 9/04, G09B 9/00

(54) **Dispositif de fixation d'un écran plat sur un simulateur de véhicule**
Vorrichtung zum Befestigen eines Flachbildschirms auf einem Fahrzeugsimulator
Device for attaching a flat screen to a vehicle simulator

(30) Priorité: 14.03.2007 FR 0701816
(43) Date de publication de la demande: 17.09.2008
(73) Titulaire: NEXTER Systems, 42328 Roanne Cedex (FR)
(72) Inventeur: Coppet, Michel, 42300 Mably (FR); Tobler, Laurent, 92400 Courbevoie (FR)
(74) Mandataire: Célanie, Christian

(56) Documents cités:
- EP-A1- 0 872 819
- EP-A1- 0 942 221
- WO-A-03/003106
- WO-A-03/010645
- US-A1- 2004 029 094
- US-A1- 2006 076 463
- MARIO MAZA: "SYMUSYS"[Online] 22 décembre 2005 (2005-12-22), pages 1-1, XP002452230 Extrait de l'Internet: URL:http://web.archive.org/web/20051222013 928/http://laimuz.unizar.es/simusys/images /imghard_1h.jpg> [extrait le 2007-09-24]
- XMOTION: "XMOTION - ELECTRONIC & SOFTWARE DESIGN FOR DYNAMICS SOLUTIONS"[Online] 20 février 2007 (2007-02-20), pages 1-1, XP002452229 Extrait de l'Internet: URL:http://web.archive.org/web/20070220101 046/http://www.xmotion.it/> [extrait le 2007-09-24]

## Description

Le secteur technique de la présente invention est celui des simulateurs et en particulier des simulateurs d'engins blindés.

Les simulateurs de véhicule sont largement utilisés pour l'apprentissage de la conduite et de l'utilisation de véhicules (cabine d'avion, véhicules militaires, véhicules ferroviaires,...). L'utilisation de tels simulateurs présente l'avantage d'être plus économique et moins dangereuse que l'utilisation réelle des véhicules. Ces simulateurs utilisent des écrans (ou moniteurs) permettant de donner une vision de l'environnement qui est proposé à l'utilisateur dans le cadre de la simulation. Ces écrans sont observés au travers d'ouvertures telles que des épiscopes ou des tunnels optiques. Il se pose d'une manière générale le problème de l'adaptation de l'écran sur le simulateur et celui de son positionnement par rapport à l'ouverture d'observation (tunnel optique).

Le brevet EP-0872819 décrit un dispositif de fixation d'un écran plat sur un simulateur de véhicule comportant une structure porteuse solidaire du simulateur et un support d'écran maintenant rigidement l'écran destiné à être fixé sur la structure porteuse afin de positionner l'écran face à un dispositif d'observation intégré au simulateur.

Il est connu de mettre en oeuvre des écrans cathodiques. Ces derniers présentent une masse relativement importante qui assure leur stabilité par rapport à la structure du simulateur. Par ailleurs ils sont généralement disposés à proximité des ouvertures ce qui facilite la visibilité et limite les pertes de lumière.

Compte tenu des évolutions techniques des composants, les écrans cathodiques doivent maintenant être remplacés par des écrans plats type LCD (cristaux liquides) ou plasma. Cependant ces écrans ont une masse plus réduite et sont plus sensibles aux vibrations que leur communique le simulateur. Les moyens de fixation standard connus (plaque à l'arrière de l'écran) qui permettent de lier un écran à un support (par exemple un pied) sont inadaptés à la fixation sur un simulateur car ils n'assurent pas la rigidité suffisante de l'écran par rapport au simulateur.

Par ailleurs il est nécessaire de pouvoir régler le positionnement de ces écrans par rapport au simulateur pour éviter toute déformation de l'image pour l'utilisateur. Il est enfin maintenant nécessaire de positionner les écrans à une distance des ouvertures qui est plus importante qu'auparavant (en raison de l'amélioration de la qualité des vues diffusées par les écrans). Il se pose donc aussi le problème d'assurer la diffusion de la lumière fournie par l'écran en évitant les perturbations provoquées par la lumière extérieure.

Le but de la présente invention est donc de fournir un dispositif de fixation d'un écran plat sur un simulateur ne présentant pas les inconvénients précédemment mentionnés.

L'invention a donc pour objet un dispositif de fixation d'un écran plat sur un simulateur de véhicule comportant une structure porteuse solidaire du simulateur et un support d'écran maintenant rigidement l'écran, destiné à être fixé sur la structure porteuse afin de positionner l'écran face à un dispositif d'observation intégré au simulateur, caractérisé en ce que le support d'écran comporte un cadre disposé à l'avant de l'écran et présentant des ailes latérales s'étendant de part et d'autre de l'écran, un support arrière adapté à être fixé sur la fixation standard arrière de l'écran et un moyen de liaison réglable entre le cadre avant et le support arrière afin de permettre l'adaptation du support d'écran à différentes épaisseurs d'écran.

Selon une caractéristique de l'invention, le dispositif comporte des flasques latérales solidaires de la structure porteuse et des moyens de liaison réglables entre les flasques latérales et les ailes latérales du cadre.

Selon une autre caractéristique de l'invention, les ailes latérales présentent des trous oblongs permettant le positionnement en hauteur de l'écran par rapport à la structure porteuse.

Selon encore une autre caractéristique de l'invention, le support arrière comporte un moyen de calage destiné à constituer un appui pour la surface arrière de l'écran.

Selon une autre caractéristique de l'invention, le dispositif comporte un raccord optique destiné à être disposé entre l'écran et le dispositif d'observation du simulateur.

Selon une autre caractéristique de l'invention, le raccord optique est fixé sur le cadre avant et monté de façon glissante dans le prolongement du dispositif d'observation du simulateur.

Selon une autre caractéristique de l'invention, le dispositif comporte des doigts d'indexage rétractables solidaires du dispositif d'observation du simulateur et permettant d'assurer le réglage en profondeur de la position de l'écran par rapport au dispositif d'observation du simulateur.

Un avantage du dispositif selon l'invention réside dans la fixation sécurisée de l'écran.

D'autres caractéristiques, détails et avantages de l'invention ressortiront plus clairement de la description donnée ci-après à titre indicatif en relation avec des dessins dans lesquels :
- la figure 1 représente une cabine d'un simulateur telle que déjà connue,
- la figure 2 est une vue en perspective d'un dispositif selon l'invention,
- la figure 3 illustre plus particulièrement les moyens de liaison réglables de l'invention,
- la figure 4 est une vue arrière d'un dispositif selon l'invention, et
- la figure 5 illustre un raccord optique disposé entre l'écran et un dispositif d'observation.

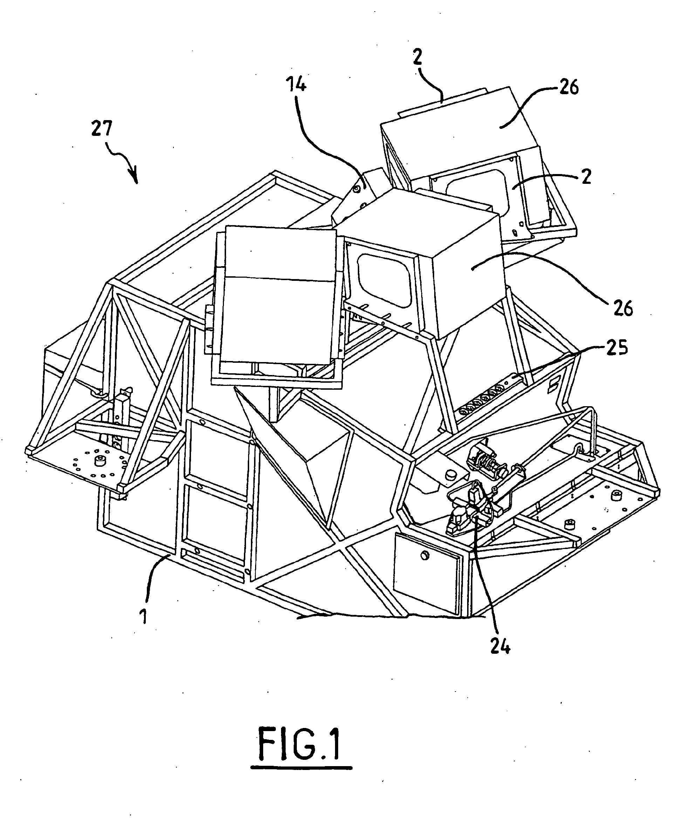

La figure 1 représente une cabine d'un simulateur telle que déjà connue, munie d'écrans classiques.

Les simulateurs de véhicule sont classiquement réalisés par une cabine 27 autour de laquelle est disposée une structure porteuse 1 destinée à recevoir des écrans 26. Un dispositif de motorisation 24 assure la mise en mouvement de la cabine afin de simuler les mouvements du véhicule. Des moniteurs 26, du type écrans cathodiques sont disposés face à des dispositifs d'observation (par exemple des épiscopes ou des tunnels optiques) permettant à la personne à l'intérieur du simulateur de visionner une situation simulée. Les écrans 26 étant soumis aux mouvements de la cabine, ils sont rigidement fixés à la structure 1 au moyen de flasques latérales 2. La structure 1 comporte également des sources d'alimentation électriques permettant la mise sous tension des écrans 26. Si une telle réalisation est adaptée à des écrans à tube cathodique, elle ne permet pas de recevoir des écrans du type LCD (à cristaux liquide) qui sont beaucoup plus légers.

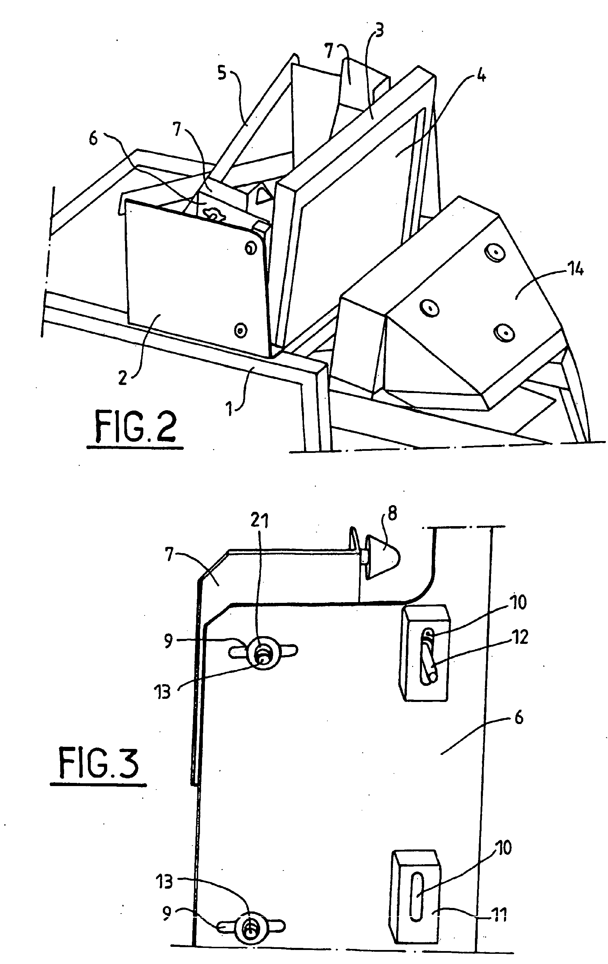

La figure 2 représente un dispositif de fixation d'un écran plat 4 sur un simulateur de véhicule selon l'invention. Le dispositif selon l'invention comporte une structure porteuse 1 solidaire du simulateur et un support d'écran maintenant rigidement l'écran 4 et destiné à être fixé sur la structure porteuse 1 afin de positionner l'écran 4 face à un dispositif d'observation 14 intégré au simulateur. Le support d'écran est réalisé par un cadre 3 et un support arrière 7. Le cadre 3 est disposé à l'avant de l'écran 4 et présente des ailes latérales 6 s'étendant de part et d'autre de l'écran 4. Le support arrière 7 est adapté à être fixé à l'arrière de l'écran 4 selon un mode de fixation qui sera décrit par la suite. Le cadre 3 et le support arrière 7 sont reliés entre eux de manière réglable afin de permettre l'adaptation du support d'écran à différentes épaisseurs d'écrans. La structure porteuse 1 comporte des flasques latérales 2 sur lesquelles est fixé de manière réglable le support d'écran. Des croisillons 5 assurent la rigidité et le maintien en position verticale des flasques latérales 2.

La figure 3 illustre plus particulièrement les moyens de liaison réglables entre le cadre 3 et le support arrière 7 et entre le cadre 3 et les flasques latérales 2.

On peut notamment distinguer sur cette figure que les ailes latérales 6 présentent des trous oblongs horizontaux 9 dans lesquels s'insèrent des vis 13 solidaires du support arrière 7. Ainsi les vis 13 coopèrent avec les trous oblongs horizontaux 9 afin de constituer un moyen de liaison à positionnement réglable entre le cadre avant 3 et le support arrière 7 permettant l'adaptation du support d'écran à différentes épaisseurs d'écrans. Les ailes latérales 6 présentent également des trous oblongs verticaux 10 dans lesquels s'insèrent des vis 12 destinées à coopérer avec les flasques latérales 2 (non représentées sur cette figure). Les vis 12 et les trous oblongs verticaux 10 constituent donc un moyen de liaison réglable permettant le positionnement en hauteur du cadre 3 par rapport aux flasques (et permettant ainsi le positionnement en hauteur de l'écran 4 par rapport à la structure porteuse 1). On remarquera que les ailes latérales 6 comportent des bossages 11 (comportant également des trous oblongs verticaux) permettant de solidariser les flasques et les ailes latérales 6 tout en conservant un espace permettant le passage des vis 13 et de leur écrou 21.

On peut également distinguer que le support arrière 7 comporte un moyen de calage 8 (ici des plots en caoutchouc) destiné à constituer un appui pour la surface arrière de l'écran 4 (non représenté).

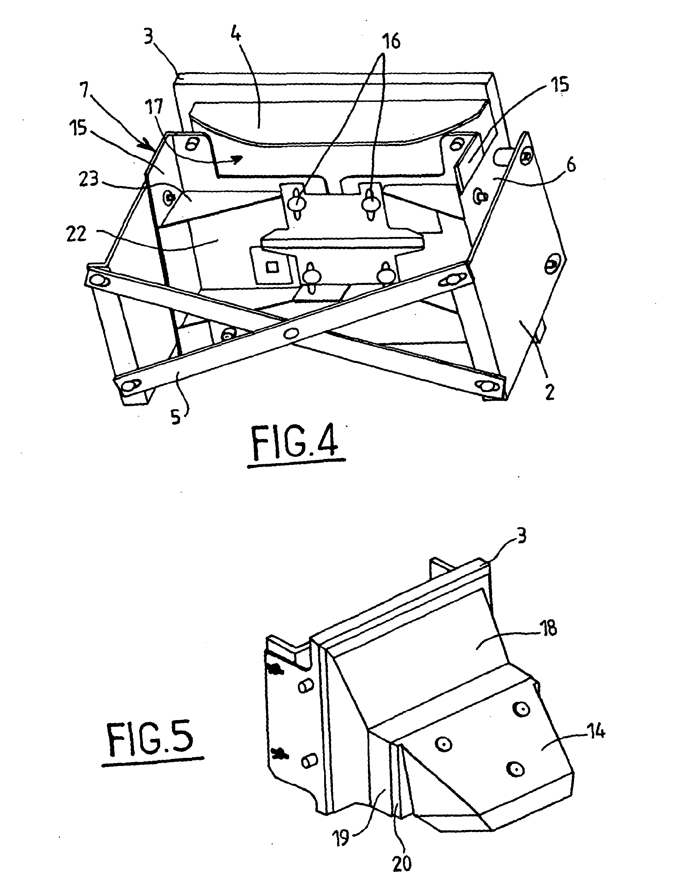

La figure 4 est une vue arrière du dispositif selon l'invention illustrant plus particulièrement le mode de fixation de l'écran 4 sur le support arrière 7. Le support arrière 7 est réalisé par une plaque principale 22 et deux plaques latérales 15. Des renforts 23 assurent la rigidité du support. Les plaques latérales 15 sont destinées à coopérer avec les ailes latérales 6 du cadre 3, comme décrit précédemment. La face arrière 17 de l'écran 4 vient en appui contre la plaque principale 22 du support arrière 7. Des vis 16 assurent la liaison rigide du support arrière 7 et de l'écran 4. D'une manière générale les écrans disponibles dans le commerce comportent au niveau de la face arrière 17, des fixations standard. Le support arrière 7 est donc adapté à être fixé sur la fixation standard arrière de l'écran 4.

La figure 5 illustre un mode de réalisation d'un raccord optique disposé entre l'écran et un dispositif d'observation.

Le raccord optique 18 est destiné à être disposé entre l'écran 4 et le dispositif d'observation 14 du simulateur. A cet effet, une première extrémité du raccord optique 18 est fixée sur le cadre avant 3 et épouse sensiblement la forme du cadre 3. La seconde extrémité 19 du raccord optique est montée de façon glissante dans le prolongement 20 du dispositif d'observation 14 du simulateur.

Afin de pouvoir positionner l'écran par rapport au dispositif d'observation 14, on pourra équiper le dispositif d'observation 14, le raccord optique 18 et/ou le cadre 3 de doigts d'indexage rétractables permettant de fixer la position relative de l'écran 4 par rapport au dispositif d'observation 14 du simulateur. Les doigts d'indexage pourront être réglables pour assurer le réglage en profondeur de la position de l'écran 4 par rapport au dispositif d'observation 14 du simulateur.

## Revendications

1. Dispositif de fixation d'un écran plat sur un simulateur de véhicule comportant une structure porteuse (1) solidaire du simulateur et un support d'écran maintenant rigidement l'écran (4), destiné à être fixé sur la structure porteuse (1) afin de positionner l'écran (4) face à un dispositif d'observation (14) intégré au simulateur, **caractérisé en ce que** le support d'écran comporte un cadre (3) disposé à l'avant de l'écran (4) et présentant des ailes latérales (6) s'étendant de part et d'autre de l'écran (4), un support arrière (7) adapté à être fixé sur la fixation standard arrière de l'écran (4) et un moyen (9,13) de liaison réglable entre le cadre avant (3) et le support arrière (7) afin de permettre l'adaptation du support d'écran à différentes épaisseurs d'écran.

2. Dispositif selon la revendication 1, **caractérisé en ce qu'**il comporte des flasques latérales (2) solidaires de la structure porteuse (1) et des moyens (10,12) de liaison réglables entre les flasques latérales (2) et les ailes latérales (6) du cadre (3).

3. Dispositif selon la revendication 2, **caractérisé en ce que** les ailes latérales (6) présentent des trous oblongs (10) permettant le positionnement en hauteur de l'écran (4) par rapport à la structure porteuse (1).

4. Dispositif selon l'une des revendications 1 à 3, **caractérisé en ce que** le support arrière (7) comporte un moyen de calage (8) destiné à constituer un appui pour la surface arrière de l'écran (4).

5. Dispositif selon l'une des revendications 1 à 4, **caractérisé en ce qu'**il comporte un raccord optique (18) destiné à être disposé entre l'écran (4) et le dispositif d'observation (14) du simulateur.

6. Dispositif selon la revendication 5, **caractérisé en ce que** le raccord optique (18) est fixé sur le cadre avant (3) et monté de façon glissante dans le prolongement (20) du dispositif d'observation (14) du simulateur.

7. Dispositif selon la revendication 5 ou 6, **caractérisé en ce qu'**il comporte des doigts d'indexage rétractables solidaires du dispositif d'observation (14) du simulateur et permettant d'assurer le réglage en profondeur de la position de l'écran (4) par rapport au dispositif d'observation (14) du simulateur.

## Claims

1. A device to attach a flat screen onto a vehicle simulator incorporating a support structure (1) integral with the simulator and a screen support to hold the screen rigidly in place (4), intended to be attached to the supporting structure (1) so as to position the screen (4) facing an observation device (14) integrated into the simulator, **characterised in that** the screen support incorporates a frame (3) positioned to the front of the screen (4) and having side wings (6) that extend on either side of the screen (4), a rear support (7) adapted to be attached to the standard connection to the rear of the screen (4) and adjustable means (9, 13) to link the front frame (3) and the rear support (7) so as to enable the screen support to be adapted to different screen thicknesses.

2. A device according to Claim 1, **characterised in that** it incorporates side flanges (2) integral with the support structure (1) and adjustable means (10, 12) to link the side flanges (2) and the side wings (6) of the frame (3).

3. A device according to Claim 2, **characterised in that** the side wings (6) are provided with oblong holes (10) enabling the screen (4) to be positioning height with respect to the support structure (1).

4. A device according to one of Claims 1 to 3, **characterised in that** the rear support (7) incorporates blocking means (8) intended to act as a bracket for the rear surface of the screen (4).

5. A device according to one of Claims 1 to 4, **characterised in that** it incorporates an optical connection (18) intended to be positioned between the screen (4) and the observation device (14) of the simulator.

6. A device according to Claim 5, **characterised in that** the optical connection (18) is attached to the front frame (3) and mounted able to slide in the prolongation (20) of the observation device (14) of the simulator.

7. A device according to Claim 5 or 6, **characterised in that** it incorporates retractable indexing fingers integral with the observation means (14) of the simulator and enabling the position of the screen (4) to be adjusted in depth with respect to the observation device (14) of the simulator.

## Patentansprüche

1. Vorrichtung zur Befestigung eines Flachbildschirms an einem Fahrzeugsimulator umfassend eine tragende Struktur (1), die fest mit dem Simulator verbunden ist, und einen den Bildschirm (4) starr festhaltenden Bildschirmträger, der dafür vorgesehen ist, an der tragenden Struktur (1) befestigt zu werden, um den Bildschirm (4) gegenüber einer in den Simulator integrierten Beobachtungsvorrichtung (14) anzuordnen, ***dadurch gekennzeichnet, dass*** der Bildschirmträger einen Rahmen (3), der am vorderen Teil des Bildschirms (4) angeordnet ist und seitliche Flügel (6) aufweist, die sich beiderseits des Bildschirms (4) erstrecken, einen hinteren Träger (7), der angepasst ist, um an der hinteren Standardbefestigung des Bildschirms (4) befestigt zu werden, und ein Mittel (9, 13) zur einstellbaren Verbindung zwischen dem vorderen Rahmen (3) und dem hinteren Träger (7) umfasst, um die Anpassung des Bildschirmträgers an verschiedene Bildschirmdicken zu ermöglichen.

2. Vorrichtung nach Anspruch 1, **dadurch gekennzeichnet, dass** sie seitliche Flansche (2), die fest mit der tragenden Struktur (1) verbunden sind, und Mittel (10, 12) zur einstellbaren Verbindung zwischen den seitlichen Flanschen (2) und den seitlichen Flügeln (6) des Rahmens (3) umfasst.

3. Vorrichtung nach Anspruch 2, **dadurch gekennzeichnet, dass** die seitlichen Flügel (6) längliche Löcher (10) aufweisen, welche die Positionierung in der Höhe des Bildschirms (4) in Bezug auf die tragende Struktur (1) ermöglichen.

4. Vorrichtung nach einem der Ansprüche 1 bis 3, **dadurch gekennzeichnet, dass** der hintere Träger (7) ein Mittel zur Verkeilung (8) umfasst, das dafür vorgesehen ist, eine Auflage für die hintere Fläche des Bildschirms (4) zu bilden.

5. Vorrichtung nach einem der Ansprüche 1 bis 4, **dadurch gekennzeichnet, dass** sie ein optisches Verbindungsstück (18) umfasst, das dafür vorgesehen ist, zwischen dem Bildschirm (4) und der Beobachtungsvorrichtung (14) des Simulators angeordnet zu werden.

6. Vorrichtung nach Anspruch 5, **dadurch gekennzeichnet, dass** das optische Verbindungsstück (18) an dem vorderen Rahmen (3) befestigt und in gleitender Weise in der Verlängerung (20) der Beobachtungsvorrichtung (14) des Simulators montiert ist.

7. Vorrichtung nach Anspruch 5 oder 6, **dadurch gekennzeichnet, dass** sie zurückziehbare Verriegelungsfinger umfasst, die fest mit der Beobachtungsvorrichtung (14) des Simulators verbunden sind und es ermöglichen, die Einstellung in der Tiefe der Position des Bildschirms (4) in Bezug auf die Beobachtungsvorrichtung (14) des Simulators zu gewährleisten.
